Europäisches Patentamt

European Patent Office

Office européen des brevets

(19)

(11) **EP 0 557 382 B1**

(12) **EUROPEAN PATENT SPECIFICATION**

(45) Date of publication and mention
of the grant of the patent:
**11.12.1996 Bulletin 1996/50**

(21) Application number: **91920360.4**

(22) Date of filing: **17.10.1991**

(51) Int Cl.⁶: **G01M 13/02**

(86) International application number:
**PCT/SE91/00698**

(87) International publication number:
**WO 92/08962 (29.05.1992 Gazette 1992/12)**

(54) **METHOD AND DEVICE FOR ALIGNMENT OF A SHAFT**

VERFAHREN UND VORRICHTUNG ZUM AUSRICHTEN EINER WELLE

PROCEDE ET DISPOSITIF D'ALIGNEMENT D'UN ARBRE

(84) Designated Contracting States:
**AT BE CH DE DK ES FR GB IT LI NL**

(30) Priority: **15.11.1990 SE 9003646**

(43) Date of publication of application:
**01.09.1993 Bulletin 1993/35**

(73) Proprietor: **ABB STAL AB**
**S-612 82 Finspang (SE)**

(72) Inventors:
• **CERNY, Jan, Antonin**
**S-582 68 Linköping (SE)**

• **ASKLÖF, Rolf, Erik**
**S-612 46 Finspang (SE)**

(74) Representative: **Erdal, Magne et al**
**Asea Brown Boveri AB**
**Patent**
**721 78 Västeras (SE)**

(56) References cited:
**US-A- 4 538 455**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

TECHNICAL FIELD

The present invention relates to a method and a device for alignment of shafts in, for example, turbine and generator halls in power plants, in which a shaft may be divided into several sections and linked by means of couplings.

BACKGROUND ART

A shaft which conveys forces between different types of turbines and generators in a power plant may exhibit a considerable length. Shaft lengths of up to 100 m may occur. In case of such shaft dimensions it is necessary to joint together shorter shaft sections with the aid of couplings. These are usually made as coupling flanges on the ends of the shaft sections. The coupling flanges from two shaft sections are brought together into a fixed joint, in which the flanges constitute coupling halves joined by means of coupling bolts. Between the couplings, the shaft is journalled in a number of bearing stands, which of necessity are more numerous than the couplings.

Rotating turbine shafts or generator shafts of the mentioned kind are subjected to rotary bending because of the weight of the shafts themselves. Especially in long, slender shafts journalled in several bearing stands, the bending stresses may be so great that the stresses are no longer negligible. They may, for example, lead to fatigue of the material in the shaft. Couplings in, for example, turbine shafts and bolts in these couplings between shaft sections have been identified as the most sensitive and most exposed portions of such a shaft. To protect couplings between shaft sections from these stresses, the distribution of the bending moment in the shaft is controlled by movement of the bearing stands, such that the bending moment becomes zero in the centre of the respective coupling. When mounting a fresh shaft, the bearing stands are placed such that the coupling halves are parallel before the couplings are screwed together. This ensures that the couplings are free from stresses caused by bending moment when installing the equipment. However, settlement of the foundation will gradually cause the bearings on which the shaft rests to get out of their ideal positions. The distribution of the bending moment along a shaft is changed upon displacements of the bearings, and the couplings will no longer be free from bending moment.

Each time an overhaul is carried out in a plant with shafts of the above-mentioned kind, the distribution of the bending moment is checked by levelling of bearing stands by means of a levelling instrument and/or by measuring the clearance between coupling halves. On the basis of these measurements, it is gradually determined whether the positions of the bearing stands are to be adjusted so that the correct mutual positions of the bearings in the bearing stands are restored. Bearing stand levelling and measurement of the clearance between coupling halves, referred to as measurement of parallelism, is an indirect method of measuring moments in the couplings. Both of these methods are time-consuming and suffer from considerable error tolerances. The couplings must be manually dismantled, which is time-consuming and undesirable in large power plants provided with equipment according to the above, where, in addition, downtime of the plant is very costly.

During plant overhauls nowadays it is common for only one or two couplings at a time to be dismantled. Any remaining engagements in the coupling cause problems with the accuracy of measurements and a number of measurements will have to be performed to attain acceptable and reliable results.

U.S. document 4 538 455 discloses a method for aligning a shaft comprising a number of shaft sections. In the type of plant described each shaft section is journalled in a pair of bearings at each shaft section's axially outboard end. The bearings are supported on hydraulic jacks. One strain gauge is disposed on the surface of each shaft section near couplings between shaft sections. The strain gauges provide each an output signal indicative of the degree of bending of the respective shaft section. The method of said document implies that a measurement of strain on the surface of the shaft section is done, whereupon a movement of a bearing is effected by use of one of the hydraulic jacks, a new measurement is done followed by a new movement of said bearing. This procedure is repeated for each shaft section end, which means that the method proceeds by a trial and error process until a minimum total bending moment at the strain gauge locations may be registered over all shaft sections. The method disclosed is applicable only to shaft sections journalled in a pair of bearings. Further the method requires hydraulic jacks supporting each bearing with an accompanying hydraulic fluid system and means for measuring bearing supporting force and for the hydraulic system a supervision system for maintaining recorded forces to support the bearings.

SUMMARY OF THE INVENTION

The present invention relates to a a method and a device for aligning shaft sections in a shaft consisting of several parts with the shaft sections joined together by means of couplings and the shaft mounted between the couplings. Strain gauges are fixed to each side of each coupling. Measured values indicating the strain at each shaft coupling are sent to a unit which evaluates the bending moment in the centre of the respective coupling. The bending moment values for each coupling are then utilized in a moment minimization unit or a third unit which utilizes indications of allowed angular deviations for each coupling to optimize the bearing movements which have to be made to minimize the total residual moment in the couplings.

The advantage of a method as briefly described above is that measurement of the bending moment and minimization of the residual moment can be carried out without the couplings having to be dismantled and that all the couplings can be evaluated at the same time and in relation to each other. This saves a great deal of time and considerably reduces the cost and increases accuracy. Measurements can also be performed when the plant, of which the shaft is a part, is in operation.

BRIEF DESCRIPTION OF THE DRAWINGS

Figure 1 shows an overall view of the device with the different units and the connection thereof to strain gauges at the four couplings of a shaft.

Figure 2 shows the orientation of a system of coordinates incorporated into the axis with designations and definitions of couplings and bearings.

Figure 3 shows the bending moment in a cylindrical rod. Figure 4 shows a flow chart of the calculation steps in the evaluation unit EVAL.

Figure 5 shows a flow chart of the calculation steps in the minimization unit MINMOM.

Figure 6 shows a flow chart of the calculation steps in the third unit LAZY.

THEORY

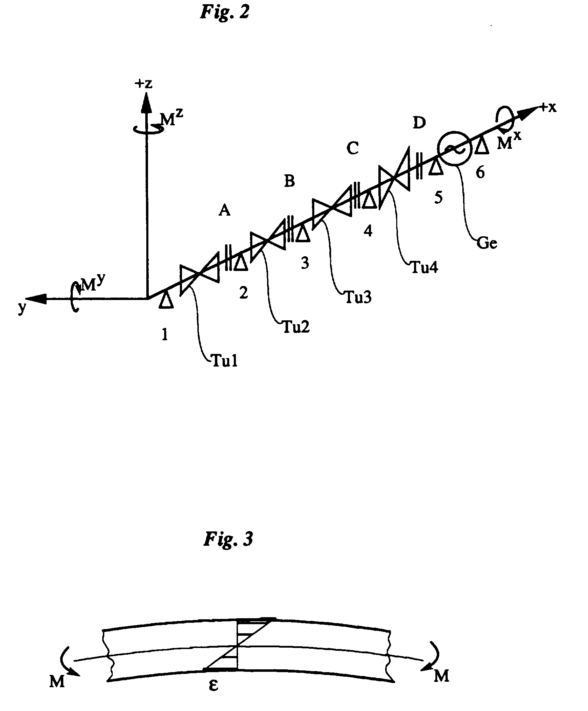

Definitions of directions, numbering of bearings and designations of couplings used in the descriptive text and by the invention are clear from Figure 2. In this figure a three-dimensional system of coordinates is placed such that the x-axis coincides with the axis of rotation of the rotating shaft and such that the positive x-axis is directed in the same direction in which couplings and bearings are normally numbered in rising succession on a shaft. The y-axis is horizontal and perpendicular to the x-axis, whereas the z-axis is directed perpendicularly upwards. The couplings in the example are designated A to D and the bearings are numbered from 1 to 6. In the figure, a number of turbines Tu1-Tu4 are also exemplified schematically on the x-axis. In the same way, a schematic generator Ge is inserted into the figure on the same axis.

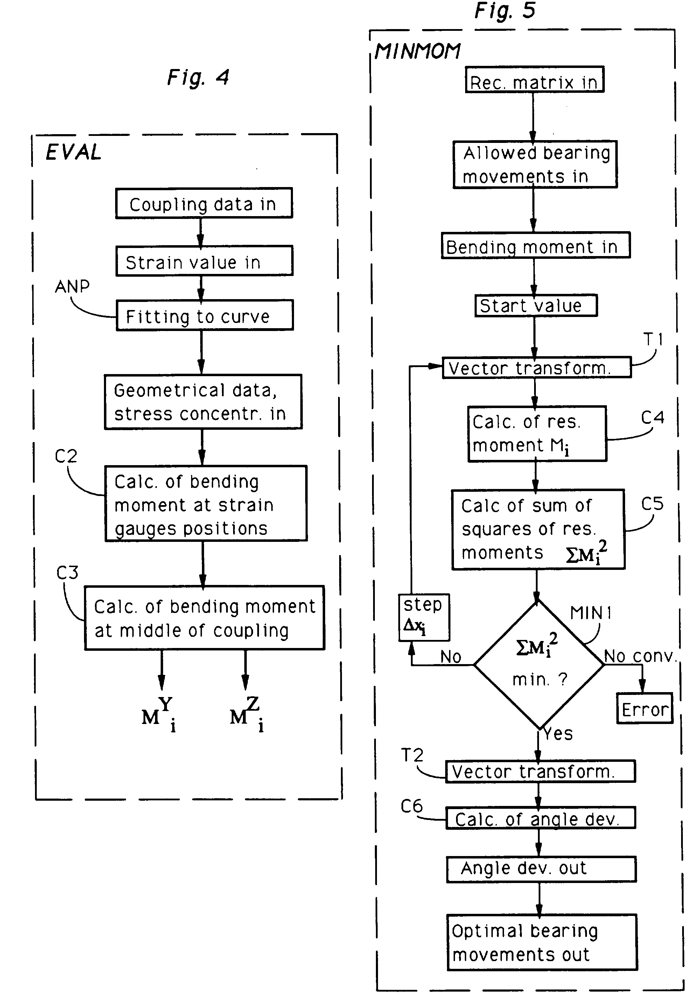

Upon bending of a cylindrical rod, a tensile stress arises on one side of the rod and a compressive stress on the other side. If a strain gauge is fixed on the rod and the rod is rotated in deflected state, the strain gauge will pass alternately through a region with tensile stress and a region with compressive stress. The strain gauge shows a varying strain which may be converted into stress in the rod and further into bending moment in the rod. See Figure 3. The bending moment can be calculated from the formula

$$M = \frac{E \cdot \pi \cdot r^3}{4 \cdot f} \cdot \varepsilon \qquad (1)$$

where

M = bending moment
E = modulus of elasticity
r = radius of shaft
f = stress concentration at coupling flange
ε = axial strain amplitude

This relationship, in a somewhat more sophisticated form, is the core in the evaluation unit EVAL, which from strain measurement on the shaft surface at a coupling evalutates the bending moment in the centre of the coupling. Bending moments in couplings are influenced by movements of bearings. A change of the position of a bearing, for example bearing 2, entails a change of the bending moment in all couplings. The bending moment in coupling A is subjected to the greatest change, in the other couplings to a somewhat smaller extent; however, not to a negligible extent. Each bearing displacement influences the bending moment in all couplings. A change of the bending moment in a coupling can thus be written as a sum of contributions from all the bearings. The relationship constitutes a linear equation system according to the following:

$$\begin{cases} \Delta M_A = K_{A1} \cdot \delta_1 + K_{A2} \cdot \delta_2 + K_{A3} \cdot \delta_3 + K_{A4} \cdot \delta_4 + K_{A5} \cdot \delta_5 + K_{A6} \cdot \delta_6 \\ \Delta M_B = K_{B1} \cdot \delta_1 + K_{B2} \cdot \delta_2 + K_{B3} \cdot \delta_3 + K_{B4} \cdot \delta_4 + K_{B5} \cdot \delta_5 + K_{B6} \cdot \delta_6 \\ \Delta M_C = K_{C1} \cdot \delta_1 + K_{C2} \cdot \delta_2 + K_{C3} \cdot \delta_3 + K_{C4} \cdot \delta_4 + K_{C5} \cdot \delta_5 + K_{C6} \cdot \delta_6 \\ \Delta M_D = K_{D1} \cdot \delta_1 + K_{D2} \cdot \delta_2 + K_{D3} \cdot \delta_3 + K_{D4} \cdot \delta_4 + K_{D5} \cdot \delta_5 + K_{D6} \cdot \delta_6 \end{cases} \quad (2)$$

or expressed in matrix form

$$\begin{Bmatrix} \Delta M_A \\ \Delta M_B \\ \Delta M_C \\ \Delta M_D \end{Bmatrix} = \begin{vmatrix} K_{A1} & K_{A2} & K_{A3} & K_{A4} & K_{A5} & K_{A6} \\ K_{B1} & K_{B2} & K_{B3} & K_{B4} & K_{B5} & K_{B6} \\ K_{C1} & K_{C2} & K_{C3} & K_{C4} & K_{C5} & K_{C6} \\ K_{D1} & K_{D2} & K_{D3} & K_{D4} & K_{D5} & K_{D6} \end{vmatrix} \star \begin{Bmatrix} \delta_1 \\ \delta_2 \\ \delta_3 \\ \delta_4 \\ \delta_5 \\ \delta_6 \end{Bmatrix} \quad (3)$$

and converted

$$\{\Delta M\} = |K| \cdot \{\delta\} \quad (4)$$

where

$\{\Delta M\}$   is a vector which indicates resultant changes of the moment in couplings A-D caused by bearing movements

$|K|$   is a receptance matrix for the bending moment

$\{\delta\}$   is the vector indicating movements of the bearings

Shafts at different plants have different receptance matrices. For each plant type, this matrix is unique and must be calculated. Different rotor members, which consist of shafts and turbines or generators rotating synchronously, have different degrees of stiffness, and the relationship between changes of the bearing position and changes of the bending moment in the couplings are therefore different for different plants. For calculation of coefficients in the receptance matrix the same rotor models are used as for calculation of critical speeds. For a shaft, however, the receptance matrix is statically calculated. The calculation is carried out in such a way that a reference calculation is performed, whereupon the bearing position is changed for one bearing at a time and the resultant change of the bending moment for each individual coupling as a result of this single bearing movement is read from a result list. As an example, the constant $K_{A5}$ in the matrix thus denotes the constant contribution to the change in moment of coupling A due to movement of bearing 5.

The same line of reasoning is used as regards angular deviations in the couplings. In case of new installation or a major overhaul in a plant, all the couplings are open. The angle between the coupling halves is, in the same way as the bending moment, dependent on the bearing position and like the bending moments it may be written as a linear equation system according to the above. The matrix which is obtained from this new equation system can then be called a receptance matrix for angles. In this connection, also the concept angular deviation is used as the product of the angle between the coupling halves in radians and the coupling radius in mm. The equation system reads as follows

$$\{\Delta V\} = |R| \cdot \{\delta\} \quad (5)$$

where

{ΔV} is a vector which indicates changes of the angular deviations in couplings A-D as a function of bearing movements

IRI is the receptance matrix for angles

{ δ } is a vector with bearing movements.

Analogously to receptance matrices for bending moments, the receptance matrix for angular deviations is calculated. Known technique utilizing a rotor model is employed. A term in the receptance matrix represents a certain coupling. After a reference calculation, an arbitrary bearing position is changed, whereupon the angle between the coupling halves at the other couplings is calculated. A new bearing position is changed in a corresponding manner while noting corresponding changes of the angular deviations in other non-displaced bearings until all bearings are examined. The calculated values are used as a basis for building up the receptance matrix. This then indicates to what extent an angle between coupling halves at the other couplings is changed for a change of the bearing position of the arbitrarily chosen bearing by 1 mm. As an example, $R_{B3}$ in the receptance matrix indicates the constant contribution to the angular change in the coupling B dependent on movement of bearing 3. Also the receptance matrix for an angular deviation is unique for each individual plant with shafts of the kind described in this invention.

Conversion of the bending moment in the coupling into an angular deviation provides a possibility of applying known alignment methods, for there is a clear relationship between the bending moment in a coupling prior to dismantling thereof and the angular deviation after the coupling has been dismantled. The conditions are that only one coupling at a time is opened, that no residual moments, for example caused by engagements in the coupling, remain and that the coupling continues to transmit transverse force. The angular deviation is then proportional to the moment. The proportionality constant must be determined for each plant and each individual coupling.

When strain gauges are located at the side of a coupling, as is the case in the present invention, bending moments calculated from the strain values measured by the strain gauges must be converted into bending moment values in the centre of the coupling. The conversion takes place along a curve with a given inclination and curvature. This curve is interpolated/extrapolated from two curves calculated in advance. These pre-calculated curves are produced by means of a calculation method of the same kind as used when determining the receptance matrices mentioned. A table with at least three calculating sections for each coupling is built up where the first row in the table indicates the distance of the section on the axis from the coupling in question. Then the calculation is carried out in two steps. In the first step the bearings adopt a reference position. The bending moments in the calculating sections are read, an arbitrary parameter is allotted to them, and they are introduced into the table in the second row. After this, in step two, a change of the bearing positions to a certain extent is carried out. This influences bending moments in the examined coupling and consequently also the bending moments in all the calculating sections. A new arbitrary parameter is allotted to the bending moments read off during the new calculation, which are introduced as the third row in the table. The different rows from the table can be reproduced in curve shape in a diagram, each of the two measurements then giving rise to a separate line in the diagram. In the method according to the invention, bending moments in the centre of the coupling are evaluated by the associated device choosing a different parameter and producing a new curve by interpolation or extrapolation, so that this new curve represents a real measurement in the best way.

Dimensional transitions between a smooth cylindrical shaft and a coupling cause stress concentration in the shaft. This must be taken into consideration when evaluating the strain measurement. The calculation of the stress concentration is performed by the finite element technique . Models according to the finite element technique must be obtained for each unique coupling. The calculation models are three-dimensional, rotationally symmetrical with non-symmetrical load. Stress concentration factors for the respective coupling may be obtained from these models. These factors are then determined such that the stress concentration factor is known at that distance from the centre of the coupling at which the respective strain gauge is fixed, whereby the influence due to the stress concentration for the respective strain gauge may be incorporated into the evaluation of the bending moment in the centre of the coupling.

DESCRIPTION OF THE PREFERRED EMBODIMENTS

An embodiment of the method and the device for shaft alignment according to the invention is built up from measuring devices in the form of strain gauges, an evaluation unit EVAL for calculating bending moments in the couplings based on the strain measurements, a minimization unit MINMOM for minimizing the residual moment in all the couplings and, as a result thereof, obtaining the corresponding bearing movements, and finally a third unit, LAZY, for minimizing the bearing movements while at the same time maintaining the angular deviations for the couplings within allowed tolerance limits.

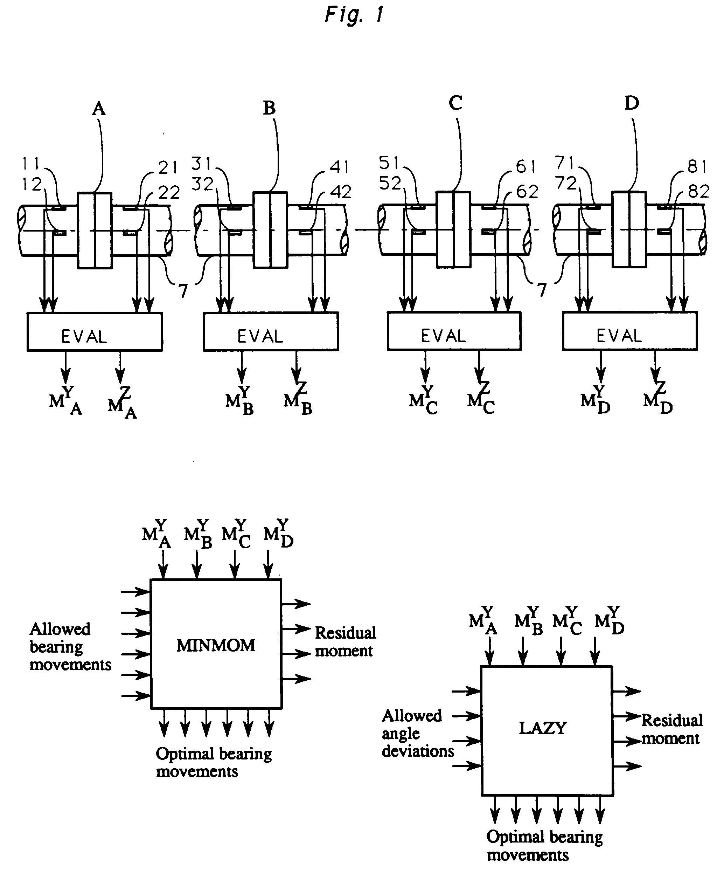

The configuration of the device is clear from Figure 1. In the description of the method and the device the strain gauges are numbered 11, 12, 21, 22, 31, 32, 41, 42, 51, 52, 61, 62, 71, 72, 81, 82, the first figure indicating the coupling half to which the strain gauges have been connected. Coupling halves 1 and 2 then belong to coupling A and so on. In the following description, the strain gauges are referred to only by indicating 11 and 12, these figures, however, referring to all the strain gauges.

Measured data are evaluated by the evaluation unit EVAL. Strain as a function of the angular position of the rotor is fed into this unit for all the strain gauges at a coupling A-D. The evaluation unit performs adaptation to a sine curve and evaluates the bending moment in each strain gauge section both in the y-direction, $M_Y$, and in the z-direction, $M_Z$. The evaluation unit EVAL is also connected to a plotter to enable the adaptation to a curve to be graphically determined. In addition, this unit performs a weighing together of the measured values of all the strain gauges at a coupling and evaluates with the aid of these measured values the bending moments in the y-direction, $M_Y$, and the bending moment in the z-direction, $M_Z$, in the centre of the coupling. Also these values are described graphically.

In the next step, the bearing movements themselves are evaluated. Depending on the situation at the time of overhaul of the plant, different paths may be chosen.

If minimal residual moments are desired after the bearing movements, the bending moments measured for the couplings A-D are fed into the minimization unit MINMOM, which calculates the bearing movements which provide a minimal total residual moment in the couplings. When feeding into the unit MINMOM, the allowed limits to bearing movements are also indicated.

Instead of the minimization unit MINMOM, a third unit LAZY may be utilized. To this unit there are fed, in addition to the measured moments, allowed tolerances for angular deviations of the couplings. The third unit LAZY calculates minimal bearing movements to get all the angular deviations within given tolerances.

There is, of course, nothing preventing the two units MINMOM and LAZY from being utilized for a comparative evaluation of proposed bearing movements from the two units.

The minimization unit MINMOM can also be used for optimizing movements of bearing stands with regard to future settlements of the foundations. It is possible to impose upon a shaft a given bearing movement, which, for example, corresponds to a settlement of the foundations for the bearing blocks over a period of a few years. As a result, the minimization unit provides expected moment changes in the couplings A-D as well as a theoretical change of the angular deviations for the period.

The evaluation unit EVAL is structured in Figure 4, in which the mode of operation is described in more detail with the aid of a flow chart of the calculation process. Initially, all data about the couplings A-D to be evaluated are fed in. These data contain information about the modulus of elasticity, the number of strain gauges 11, 12 at each coupling, the position of the strain gauges on the shaft, the distance of the strain gauges from the coupling flange and multipliers for stress concentration factors depending on the location of the strain gauges, for example. The strain values measured by the strain gauges are also fed into the evaluation unit. Thereafter, an adaptation of measured values from the strain gauges to a curve is carried out in a first calculation module, ANP. Purely physically, the measured strains must lie on a sine curve. In practice, however, it has proved that the strain does not resume its original value after the shaft has rotated through 360°.

The reason for this is not known, but this phenomenon is taken into consideration by composing the theoretical curve from a sinusoidal part and a linearly varying part according to

$$f(\alpha) = B + C\,\alpha + A\sin(\alpha + \varphi + \varphi_o) \tag{6}$$

where the first two terms constitute the linear part and the third term the sinusoidal part of the sought curve. The constant $\varphi_o$ is the position of the strain gauge relative to the z-axis. When performing the adaptation, the constants A, B, C and the phase angle $\varphi$ are calculated. For this calculation, only the amplitude A and the phase angle $\varphi$ of the sine component are used. A minimization routine seeks parameters such that the sum of squares of the deviation between measured strains and values of the theoretical curve becomes minimal. Values such as the rotor diameter for a rotor on the shaft, stress concentration factors and a change of the bending moment caused by the instrinsic weight of the shaft between the strain gauge section and the centre of the coupling as well as the direction of rotation are fed in. The evaluation unit EVAL then calculates, in a second calculation module C2, the bending moments $M_y$ and $M_z$ in the strain gauge sections. The strain amplitude T is divided into its components $T_y$ and $T_z$ according to

$$T_Z = T \cdot \sin\varphi$$

$$T_Y = -\,\text{Rotdir} \cdot T \cdot \cos\varphi$$

where Rotdir considers the direction of rotation of the shaft during the measurement and Rotdir = - 1 is the direction of rotation from +z to +y or expressed in the counterclockwise direction seen in the direction of the x-axis. The calculation of the bending moment in the strain gauge section is made in a similar manner as the bending of a beam with a circular cross section according to

$$M_Y = E \cdot T_Y \cdot \pi \cdot r^3 /4 / \text{stress conc. factor} \qquad (7a)$$

$$M_Z = E \cdot T_Z \cdot \pi \cdot r^3 /4 / \text{stress conc. factor} \qquad (7b)$$

In the next step, in a third calculation module C3, the evaluation unit EVAL performs a calculation of the bending moments $M_Y$ and $M_Z$ in the centre of the coupling. This is performed in such a way that a difference between values of a pre-determined line, obtained from a given table with the pre-calculated magnitudes of the moments, and the magnitudes of the moments determined with the aid of the strain gauges 11, 12 is formed. These differences are squared and summed up, whereupon a minimum is sought. From this, the bending moments $M_Y$ and $M_Z$ are then obtained, which are written out graphically for determination and are also forwarded to the units MINMOM and LAZY for further processing. The described evaluation of bending moments in the centre of the coupling, executed by the unit EVAL, is carried out for each coupling on the shaft.

The bending moment $M_Y$ around the horizontal y-axis is composed of the bending moment caused by the intrinsic weight of the shaft and deformation, imposed upon it by displacements of bearings. The distribution of the bending moments because of the intrinsic weight is dependent solely on shaft dimensions, bearing distances and the weight of, for example, turbine blading and cannot be influenced from the outside. This moment distribution has a complicated composition of first and second degree curves, which may be calculated in advance and stored, for example as a shaft statically loaded with its own weight and all the bearings at the same level.

The distribution of bending moments caused by bearing displacements is independent of the intrinsic weight of the shaft and may be calculated with the bearings in the current positions and a massless shaft. The distribution of the moment is composed of straight lines between the bearing points and the points with zero moment in the end bearings. This distribution of the moment is dependent on the current bearing positions and cannot be calculated and stored in advance.

In the minimization unit MINMOM, the optimal movement of the bearings is calculated such that the squared sum of the residual moments of the couplings A-D becomes as small as possible. The input data to the unit consists of limits to allowed bearing movement and measured bending moments in the couplings obtained from the evaluation unit EVAL.

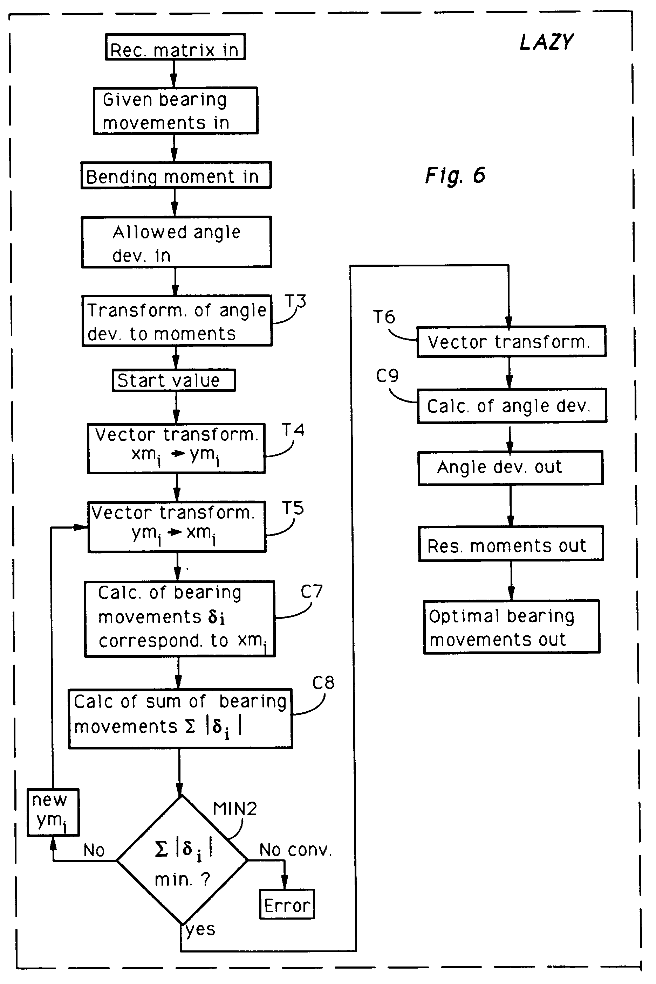

The calculation process in the minimization unit MINMOM is clear from the flow chart in Figure 5. MINMOM is first fed with the receptance matrix for the type of plant, and with information about the allowed bearing movements and with the measured coupling moments from the evaluation unit EVAL. Then, each bearing is given a start value for movement $x_i$ which is set equal to the minimally allowed movement of the respective bearing. The allowed bearing movements are within the interval $A_i$ to $B_i$, where $A_i$ indicates the smallest movement allowed. The movements for each bearing together form a vector $\{x_i\}$. This vector is transformed in a first transformer T1 into a vector $\{y_i\}$ to enable limits to bearing movements to be introduced in the calculations. The mimimization unit MINMOM then operates with this transformed vector according to

$$y_i = \arcsin \sqrt{(x_i - A_i)/(B_i - A_i)} \qquad (8)$$

In the next step, a fourth calculation module C4, the residual moment $M_i$ in the respective coupling is calculated. Moment $M_i$ with index one, $M_1$, then denotes the residual moment in the first coupling, that is, coupling A, etc. The residual moment in an individual coupling is equal to the sum of the moment $M^y_i$ which prevailed in the coupling prior to the movement and the change of moment $\Delta M_i$ which may be achieved by a bearing movement, or written in vector form

$$\{M_i\} = \{M^y_i\} + |K_{ij}| \cdot \{\delta_i\} \qquad (9)$$

where $K_{ij}$ is a receptance matrix, determined in advance, for the relationship between bearing movements and changes of the bending moment in the couplings A-D in the plant in question. $M^y_i$ is bending moment in the respective coupling A-D calculated by the evaluation unit EVAL. This moment $M^y_i$ is the one that is to be eliminated, if possible, whereas

$\delta_i$ designates the bearing movements sought. In the calculations, $\delta_i$ corresponds to $y_i$.

To continue, in a fifth calculation module C5 the squares of the residual moments are calculated, whereupon these squares are summed up. In a subsequent minimization module MIN1, by stepwise increase of the magnitude of the bearing movements $x_i$ within the allowed interval, it is investigated whether the total residual moment for the couplings converges into a minimum. From this minimimization unit MIN1, there is a jump back to the first transformer T1 for transformation of $x_i$ into $y_i$ for calculation of new residual moments for the new bearing positions. In this mimimization module MIN1 there is also a jump out with an indication about any non-convergence of the total residual moment.

After minimization, the vector $\{\delta_i\}$ is obtained, which now contains the bearing movements sought. These are retransformed in a second transformer T2 into actual bearing movements according to

$$x_i = A_i + (B_i - A_i)\cdot\sin^2 y_i \qquad (10)$$

To have a check-up on the resultant angular deviations in the respective coupling A-D, these angular deviations are calculated in a subsequent sixth calculation module C6 in the minimization unit MINMOM according to

$$V_i = M_i \cdot D_i /2 \cdot R_i \qquad (11)$$

where

$V_i$ is the angular deviation in the coupling
$M_i$ is the residual moment in the coupling
$D_i$ is the coupling diameter
$R_i$ is a stored proportionality constant

The minimization unit MINMOM then provides information as to optimal bearing movements $x_i$ for each coupling A-D, calculated angular deviations as well as residual moments for the couplings during these optimal bearing movements. The indicated bearing movements are then carried out manually according to the instructions obtained from the minimization unit MINMOM.

Instead of sending the evaluated measured signals from the evaluation unit EVAL for the bending moment $M^y_i$ in the centre of the couplings to the minimization unit MINMOM, these values can be utilized in a third unit LAZY. This process may be desirable when the situation, at the time of overhaul of the current plant, for example is such that certain bearings remain stationary and must not be moved. Such circumstances may arise because certain operations, which must not be disturbed, are going on at certain bearings, or for other reasons. A given bearing movement is then imparted to these bearings concerned. Normally, this given bearing movement is set equal to zero. In that case, a "short cut" for determining the necessary bearing movements may be utilized. In this process a calculation is performed of the minimal bearing movements needed at the other four bearings for maintaining the angular deviations of all the couplings within the allowed angular deviation interval for the respective coupling in case of given bearing movements for at least two bearings in a plant according to the example.

The change of moment in a coupling which is to be achieved by bearing movements is equal to the difference between the moment $M^t_i$ which may be allowed and the moment $M^y_i$ which has been measured . The angular deviation $V_i$ in a coupling is proportional to the moment which prevailed in the coupling before this was opened according to equation (11). The relationship between a change of moment $\Delta M_i$ in the bearing movements $\delta$ of the coupling is given according to

$$\{\Delta M_i\} = \{M^t_i\} - \{M^y_i\} = |R_{ij}| \cdot \{\delta_i\} \qquad (12)$$

If two bearing movements are given according to the above, for example $\delta_1$ and $\delta_2$, the relationship may be written as follows

$$R_{A3.}\,\delta_3 + R_{A4}.\delta_4 + R_{A5}.\delta_5 + R_{A6}.\delta_6 = M^t_A - M^y_A - R_{A1}.\delta_1 - R_{A2}.\delta_2$$

$$R_{B3}.\delta_3 + R_{B4}.\delta_4 + R_{B5}.\delta_5 + R_{B6}.\delta_6 = M^t_B - M^y_B - R_{B1}.\delta_1 - R_{B2}.\delta_2$$

$$R_{C3} \cdot \delta_3 + R_{C4} \cdot \delta_4 + R_{C5} \cdot \delta_5 + R_{C6} \cdot \delta_6 = M_C^t - M_C^y - R_{C1} \cdot \delta_1 - R_{C2} \cdot \delta_2$$

$$R_{D3} \cdot \delta_3 + R_{D4} \cdot \delta_4 + R_{D5} \cdot \delta_5 + R_{D6} \cdot \delta_6 = M_D^t - M_D^y - R_{D1} \cdot \delta_1 - R_{D2} \cdot \delta_2 \qquad (13)$$

For an allowed moment $M_i^t$, a measured moment $M_i^y$ and two given bearing movements $\delta_1$ and $\delta_2$, the necessary bearing movements $\delta_3$, $\delta_4$, $\delta_5$ and $\delta_6$ may be calculated. The matrix $R_{ij}$ is a receptance matrix according to the above, calculated in advance.

The third unit LAZY is fed, according to Figure 6, with the receptance matrix, the two given bearing movements, the measured bending moments as well as allowed angular deviations for the respective coupling. Thereafter, the allowed angular deviation interval is transformed into allowed residual moment interval, $AM_i$ to $BM_i$, for the respective coupling in a third transformer T3 by the use of an equation analogous to equation (11). In the next step, the minimally possible residual moment, $AM_i$, in this interval is given as starting value for a minimization procedure. The residual moment for the respective coupling is designated $xm_i$ in the calculation. When searching the minimal bearing movements, this variable $xm_i$ is thus set in a first calculation loop to be equal to the minimally possible residual moment $AM_i$, whereafter calculations are carried out where $xm_i$ is stepped up to $BM_i$. To be able to introduce limits to residual moments, however, the vector $xm_i$ is transformed in a fourth transformer T4 into a vector $ym_i$ analogous to the equation (8), where $ym_i$ in reality corresponds to the allowed residual moment $M_i^t$.

The search for the minimal bearing movements is performed in a loop which starts with transformation of $ym_i$ back to the residual moment $xm_i$ in a transformer T5. In the calculation module C7, the righthand vector to equation (13) as well as bearing movements corresponding to the residual moment $xm_i$ are calculated. The sum of absolute values of bearing movements $\Sigma|\delta|$ is calculated in a module C8. In the minimization module MIN2 it is determined whether the minimization of $\Sigma|\delta|$ is reached. If not, the minimization module determines a new combination of $\Sigma|\delta|$ and the loop is repeated. The minimization module MIN2 interrupts the calculations if the search does not converge.

After completed minimization, the vector $ym_i$ is transformed back to $xm_i$ in a sixth transformer T6. This vector then contains the sought optimal residual moments for two given bearing movements. The module C8 contains the associated optimal $\delta_i$. A ninth calculation module C9 performs calculation of angular deviations for the respective coupling A-D according to equation (11).

Finally, the third unit LAZY provides information about the necessary bearing movements and about angular deviations and residual moments for the respective coupling. The indicated bearing movements are then carried out manually according to instructions from the third unit LAZY.

The calculation procedures such as calculation modules and transformers in the separate steps in the different units, that is, the evaluation unit EVAL, the minimization unit MINMOM and the third unit LAZY according to the invention are realized by calculating units based either on digital technique or on analog technique, or on hybrids thereof.

In the above embodiment the method has been described for a plant with four couplings and six bearings. The method according to the invention may, of course, be used in plants with an optional number of couplings and bearings, which is also clear from the indexing in the formulas.

By using telemetry transmission of measured signals from the strain gauges 11, 12 to the evaluation unit EVAL, a basis for shaft alignment according to the invention can be obtained during operation of, for example, a turbo generator with a shaft divided according to the invention.

The method and the device according to the invention has been tested by performing comparisons with measured values before and after shaft alignments carried out in accordance with traditional methods and comparisons of measures proposed according to the invention and the measures taken in connection with corresponding shaft alignments according to the traditional methods. In these comparisons the method according to the invention has shown a very good correspondence to results obtained with previously known methods for shaft alignment while at the same time providing very great savings of time.

## Claims

1. A method of shaft alignment of a rotor comprising a shaft (7) with couplings (A-D) between shaft sections and the shaft journalled in bearings (1-6) at shaft ends and between the couplings (A-D), at least one member for measuring strain being arranged on the shaft surface at each side of each coupling (A-D), wherein

   - the strain on the shaft surface at at least one point on each side of each coupling is measured

   - the bending moment at each point is calculated

- the bending moment in each centre of each coupling is calculated

- the necessary bearing movements, to minimize the total residual moment in the centre of the couplings (A-D) and/or the necessary bearing movements which maintain the angular deviation in the respective coupling (A-D) within the allowed margin, are calculated

- physical bearing movements are carried out in accordance with the results of the calculation obtained.

2. A method according to claim 1, wherein for transmitting measured signals from strain gauges (11, 12) to a unit (EVAL) in the device, either direct connection by means of measuring cables under slow rotation of the rotor or telemetry at an arbitrary speed of the rotor is utilized.

3. A device for carrying out a method of aligning a shaft of a rotor, the shaft (7) being provided with couplings (A-D) between shaft sections and the shaft being journalled in bearings (1-6) at shaft ends and between the couplings, at least one member for measuring strain being arranged on the shaft surface at each side of each coupling, the device comprising:

- first calculation units (EVAL, MINMOM) being programmed to utilize measured strain on the shaft surface at at least one point on each side of each coupling, to calculate the bending moment at each point, to calculate the bending moment at each centre of each coupling, and to calculate bearing movements which are required to minimize the total residual moment in the centres of the couplings and/or
- second calculation units (EVAL, LAZY) being programmed to utilize measured strain on the shaft surface at at least one point on each side of each coupling, to calculate the bending moment at each point, to calculate the bending moment at each centre of each coupling, and to calculate bearing movements which maintain angular deviations in the couplings within allowed margins and
- means for carrying out the calculated bearing movements.

4. A device according to claim 3, wherein the device which performs the minimization of residual moments and/or minimization of bearing movements comprises an evaluation unit (EVAL) for transforming measured strains at a coupling (A-D) into bending moments in the centre of said coupling.

5. A device according to claim 4, wherein the device which performs the minimization of residual moments and/or the minimization of bearing movements comprises a minimization unit (MINMOM) for minimizing the total residual moment in the couplings (A-D) by determining the requisite movements of the bearings (1-6) and/or a third unit (LAZY) for minimizing the requisite movements of the bearings (1-6) while maintaining angular deviations for the couplings within allowed margins.

6. A device according to claim 4, wherein the evaluation unit (EVAL) comprises

a first calculation module (ANP) for adapting measured values from strain gauges (11, 12) to a theoretically determined curve,

a second calculation module (C2) for determining bending moments in the strain gauge section of a coupling, and

a third calculation module (C3) for determining bending moments in the centre of the coupling.

7. A device according to claim 5, wherein the minimization unit (MINMOM) comprises

a fourth calculation module (C4) for determining residual moments in the respective coupling (A-D),

a fifth calculation module (C5) for determining the sum of squares of the residual moments of the couplings (A-D), and

a minimization module (MIN1) for determining a minimum of the total residual moments of the couplings.

8. A device according to claim 7, wherein the minimization unit MINMOM comprises a sixth calculation module C6 which, for control of resultant angular deviations in the respective coupling (A-D), calculates these angular deviations from a known residual moment for the respective coupling.

9. A device according to claim 5, wherein the third unit (LAZY) comprises

a transformer (T3) for conversion of an allowed angular deviation interval into an allowed residual moment interval for the respective coupling,

a seventh calculation module (C7) for determining bearing movements corresponding to given residual moments in the couplings (A-D),

an eighth calculation module (C8) for determining the sum of absolute values of bearing movements, and

a minimization module (MIN2) for determining a minimum of necessary bearing movements in case of a number of given bearing movements.

10. A device according to claim 3, wherein for transmitting measured signals from strain gauges (11, 12) to a unit (EVAL) in the device, either direct connection by means of measuring cables under slow rotation of the rotor or telemetry at an arbitrary speed of the rotor is utilized.

**Patentansprüche**

1. Verfahren zum Ausrichten der Welle eines Rotors, dessen Welle (7) aus Wellenabschnitten mit Kupplungen (A-D) zwischen den Wellenabschnitten besteht, wobei die Welle in Lagern (1-6) an den Wellenenden und zwischen den Kupplungen (A-D) gelagert ist und mindestens ein Glied zur Messung von Dehnungen (Spannungen) an der Wellenoberfläche an jeder Seite jeder Kupplung (A-D) angeordnet ist, wobei

- die Dehnung an der Wellenoberfläche an mindestens einem Punkt auf jeder Seite jeder Kupplung gemessen wird,

- das Biegemoment in jedem Punkt berechnet wird,

- das Biegemoment im Zentrum jeder Kupplung berechnet wird,

- die notwendigen Lagerverschiebungen zur Minimierung des bleibenden Gesamtbiegemomentes im Zentrum der Kupplungen (A-D) und/oder die erforderlichen Lagerverschiebungen, welche die Winkelabweichungen in der entsprechenden Kupplung (A-D) innerhalb zulässiger Grenzen halten, berechnet werden, und

- physikalische (räumliche) Lagerverschiebungen in Übereinstimmung mit den durch die Berechnung erhaltenen Ergebnissen vorgenommen werden.

2. Verfahren nach Anspruch 1, wobei zur Übertragung von Meßsignalen von den Dehnungsmessern (11, 12) zu einer Einheit (EVAL) in der Vorrichtung entweder eine direkte Verbindung mittels Meßkabeln bei langsamer Drehung des Rotors verwendet wird oder Telemetrie bei beliebiger Geschwindigkeit des Rotors verwendet wird.

3. Vorrichtung zur Durchführung eines Verfahren zum Ausrichten der Welle eines Rotors, wobei die Welle (7) mit Kupplungen (A-D) zwischen Wellenabschnitten versehen ist, die Welle in Lagern (1 bis 6) an den Wellenenden und zwischen den Kupplungen gelagert ist, und mindestens ein Glied zur Messung von Dehnungen (Spannungen) an der Wellenoberfläche auf mindestens einer Seite jeder Kupplung angebracht ist, welche Vorrichtung ferner enthält:

- erste Berechnungseinheiten (EVAL, MINMOM), die so programmiert sind, daß sie gemessene Dehnungen an der Wellenoberfläche in mindestens einem Punkt auf jeder Seite jeder Kupplung verwenden, um das Biegemoment in jedem Punkt zu berechnen, um das Biegemoment im Zentrum jeder Kupplung zu berechnen und um die zur Minimierung des bleibenden Gesamtbiegemomentes in den Zentren der Kupplungen erforderlichen Lagerverschiebungen zu berechnen, und/oder

- zweite Berechnungseinheiten (EVAL, LAZY), die so programmiert sind, daß sie gemessene Dehnungen an der Wellenoberfläche in mindestens einem Punkt auf jeder Seite jeder Kupplung verwenden, um das Biegemoment in jedem Punkt zu berechnen, um das Biegemoment im Zentrum jeder Kupplung zu berechnen und um Lagerverschiebungen zu berechnen, welche die Winkelabweichungen in den Kupplungen innerhalb zulässiger Grenzen halten, und

- Einrichtungen zur Ausführung der berechneten Lagerverschiebungen.

4. Vorrichtung nach Anspruch 3, wobei die Vorrichtung, welche die Minimierung der bleibenden Biegemomente und/oder die Minimierung der Lagerverschiebungen durchführt, eine Berechnungseinheit (EVAL) enthält zur Umformung gemessener Dehnungen an einer Kupplung (A-D) in Biegemomente im Zentrum der genannten Kupplung.

5. Vorrichtung nach Anspruch 4, wobei die Vorrichtung, welche die Minimierung der bleibenden Biegemomente und/oder die Minimierung der Lagerverschiebungen durchführt, eine Minimierungseinheit (MINMOM) enthält zur Minimierung des bleibenden Gesamtbiegemoments in den Kupplungen (A-D) durch Bestimmung der erforderlichen Lagerverschiebungen (1-6) und/oder eine dritte Einheit (LAZY) enthält zur Minimierung der erforderlichen Lagerverschiebungen (1-6) unter Aufrechterhaltung der Winkelabweichungen der Kupplungen innerhalb zulässiger Grenzen.

6. Vorrichtung nach Anspruch 4, wobei die Berechnungseinheit (EVAL) enthält

- ein erstes Berechnungsmodul (ANP) zur Anpassung von Meßwerten der Dehnungsmesser (11, 12) an eine theoretisch ermittelte Kurve,

- ein zweites Berechnungsmodul (C2) zur Bestimmung von Biegemomenten in den mit Dehnungsmessern versehenen Abschnitten einer Kupplung und

- ein drittes Berechnungsmodul (C3) zur Bestimmung von Biegemomenten im Zentrum der Kupplung.

7. Vorrichtung nach Anspruch 5, wobei die Minimierungseinheit (MINMOM) enthält

- ein viertes Berechnungsmodul (C4) zur Bestimmung bleibender Biegemomente in der betreffenden Kupplung (A-D),

- ein fünftes Berechnungsmodul (C5) zur Bestimmung der Summe der Quadrate der bleibenden Biegemomente der Kupplungen (A-D) und

- ein Minimierungsmodul (MIN1) zur Bestimmung eines Minimums der bleibenden Gesamtbiegemomente der Kupplungen.

8. Vorrichtung nach Anspruch 7, wobei die Minimierungseinheit (MINMOM) ein sechstes Berechnungsmodul (C6) enthält, welches zur Steuerung der resultierenden Winkelabweichungen in der betreffenden Kupplung (A-D) diese Winkelabweichungen von einem bekannten bleibenden Biegemoment für die entsprechende Kupplung berechnet.

9. Vorrichtung nach Anspruch 5, wobei die dritte Einheit (LAZY) enthält:

einen Wandler (T3) zur Wandlung eines zulässigen Winkelabweichungsintervalls in ein zulässiges Biegemomentenintervall für die entsprechende Kupplung,

ein siebentes Berechnungsmodul (C7) zur Bestimmung der Lagerverschiebungen, die gegebenen bleibenden Biegemomenten in den Kupplungen (A-D) entsprechen,

ein achtes Berechnungsmodul (C8) zur Bestimmung der Summe der Absolutwerte der Lagerverschiebungen und

ein Minimierungsmodul (MIN2) zur Bestimmung eines Minimums an notwendigen Lagerverschiebungen im Falle einer Anzahl gegebener Lagerverschiebungen.

10. Vorrichtung nach Anspruch 3, wobei zur Übertragung gemessener Signale von den Biegemomenten (11, 12) zu einer Einheit (EVAL) in der Vorrichtung entweder eine direkte Verbindung mittels Meßkabeln bei langsamer Drehung des Rotors verwendet wird oder Telemetrie bei beliebiger Geschwindigkeit des Rotors verwendet wird.

**Revendications**

1.  Procédé pour aligner l'arbre d'un rotor comprenant un arbre (7) muni d'accouplements (A à D) disposé entre des tronçons d'arbres, l'arbre étant monté dans des paliers (1 à 6) à des bouts d'arbres et entre les accouplements (A à D), au moins un élément destiné à mesurer une contrainte étant disposé sur la surface de l'arbre de chaque côté de chacun des accouplements (A à D), dans lequel

    -   on mesure la contrainte sur la surface de l'arbre en au moins un point de chaque côté de chacun des accouplements ;
    -   on calcule le moment de flexion en chacun des points ;
    -   on calcule le moment de flexion en chacun des centres de chacun des accouplements ;
    -   on calcule les déplacements de paliers nécessaires pour minimiser le moment résiduel global au centre des accouplements (A à D) ainsi que les déplacements de paliers nécessaires qui conservent la déviation angulaire dans les accouplements (A à D) respectifs à l'intérieur de la marge autorisée ;
    -   conformément aux résultats des calculs obtenus, on réalise les déplacements physiques des paliers.

2.  Procédé suivant la revendication 1, dans lequel pour transmettre des signaux mesurés de jauge (11, 12) de contrainte à une unité (EVAL) dans le dispositif, on utilise soit une connexion directe au moyen de câbles de mesure lors d'une rotation à faible vitesse du rotor ou par télémétrie à une vitesse arbitraire du rotor.

3.  Dispositif pour mettre en oeuvre un procédé d'alignement d'un arbre d'un rotor, l'arbre (7) étant muni d'accouplement (A à D) disposé entre des tronçons d'arbres et l'arbre étant monté dans des paliers (1 à 6) à des bouts d'arbres et entre les accouplements, au moins un élément destiné à mesurer une contrainte étant disposé sur la surface de l'arbre de chaque côté de chaque accouplement, le dispositif comportant :

    -   des première unités (EVAL, MINMON) de calcul qui sont programmées pour utiliser une contrainte mesurée sur la surface de l'arbre en au moins un point de chaque côté de chaque accouplement pour calculer le moment de flexion en chaque point, pour calculer le moment de flexion en chaque centre de chaque accouplement, et pour calculer des déplacements de paliers qui sont nécessaires pour minimiser le moment résiduel global au centre des accouplements et/ou
    -   des secondes unités (EVAL, LAZY) de calcul qui sont programmées pour utiliser une contrainte mesurée sur la surface de l'arbre en au moins un point de chaque côté de chaque accouplement pour calculer le moment de flexion en chaque point, pour calculer le moment de flexion en chaque centre de chaque accouplement, et pour calculer des déplacements de paliers qui conservent des déviations angulaires dans les accouplements à l'intérieur de marges autorisées et
    -   des moyens pour mettre en oeuvre les déplacements de paliers calculés.

4.  Dispositif suivant la revendication 3, dans lequel le dispositif qui réalise la minimisation des moments résiduels et/ou la minimisation des déplacements de paliers comporte une unité (EVAL) d'évaluation destinée à transformer des contraintes mesurées en un accouplement (A à D) en des moments de flexion au centre de chaque accouplement.

5.  Dispositif suivant la revendication 4, dans lequel le dispositif qui réalise la minimisation des moments résiduels et/ou la minimisation des déplacements de paliers comporte une unité (MINMON) de minimisation destinée à minimiser le moment résiduel global dans les accouplements (A à D) en déterminant les déplacements nécessaires des paliers (1 à 6) et/ou une troisième unité (LAZY) destinée à minimiser les déplacements nécessaires des paliers (1 à 6), tout en maintenant des déviations angulaires pour les accouplements à l'intérieur de marges autorisées.

6.  Dispositif suivant la revendication 4, dans lequel l'unité (EVAL) d'évaluation comporte un premier module (ANP) de calcul destiné à adapter des valeurs mesurées provenant des jauges (11, 12) de contrainte à une courbe déterminée de manière théorique, un second module (C2) de calcul destiné à déterminer des moments de flexion dans le tronçon de jauge de contrainte d'un accouplement, et un troisième module (C3) de calcul destiné à déterminer des moments de flexion au centre de l'accouplement.

**7.** Dispositif suivant la revendication 5, dans lequel l'unité (MINMOM) de minimisation comporte

un quatrième module (C4) de calcul destiné à déterminer des moments résiduels dans les accouplements (A à D) respectifs,
un cinquième module (C5) de calcul destiné à déterminer la somme des carrés des moments résiduels des accouplements (A à D), et
un module (MIN1) de minimisation destiné à déterminer un minimum des moments résiduels globaux des accouplements.

**8.** Dispositif suivant la revendication 7, dans lequel l'unité (MINMOM) de minimisation comporte un sixième module (C6) de calcul qui, en vue de commander des déviations angulaires résultantes dans les accouplements (A-D) respectifs, calcule ces déviations angulaires à partir d'un moment résiduel connu pour l'accouplement respectif.

**9.** Dispositif suivant la revendication 5, dans lequel la troisième unité (LAZY) comporte

un transformateur (T3) destiné à convertir un intervalle de déviation angulaire autorisé en un intervalle de moment résiduel autorisé pour l'accouplement respectif,
un septième module (C7) de calcul destiné à déterminer des mouvements de paliers correspondant aux moments résiduels donnés dans les accouplements (A à D),
un huitième module (C8) de calcul destiné à déterminer la somme des valeurs absolues des déplacements de paliers, et
un module (MIN2) de minimisation destiné à déterminer un minimum des déplacements de paliers nécessaires dans le cas d'un nombre de déplacements de paliers donnés.

**10.** Dispositif suivant la revendication 3, dans lequel il est utilisé pour transmettre des signaux mesurés de jauge (11, 12) de contrainte à une unité (EVAL) dans le dispositif, soit une connexion directe au moyen de câbles de mesure lors d'une rotation à petite vitesse du rotor, soit par télémétrie dans le cas d'une vitesse arbitraire du rotor.

*Fig. 1*

*Fig. 2*

*Fig. 3*

*Fig. 5*

*Fig. 4*

**EVAL**

```
Coupling data in
        ↓
Strain value in
        ↓
ANP ⟍
Fitting to curve
        ↓
Geometrical data,
stress concentr. in
        ↓
C2 ⟍
Calc. of bending
moment at strain
gauges positions
        ↓
C3 ⟍
Calc. of bending moment
at middle of coupling
        ↓           ↓
       M^Y_i       M^Z_i
```

**MINMOM**

```
Rec. matrix in
        ↓
Allowed bearing
movements in
        ↓
Bending moment in
        ↓
Start value
        ↓
Vector transform.  ⟍ T1
        ↓
Calc. of res.     ⟍ C4
moment M_i
        ↓
Calc of sum of    ⟍ C5
squares of res.
moments    ΣM_i^2
        ↓
step          ⟍ MIN1
Δx_i    ◇ ΣM_i^2      No conv.
   No   ◇ min. ?   →  Error
        ↓ Yes
T2 ⟍ Vector transform.
        ↓
C6 ⟍ Calc. of angle dev.
        ↓
Angle dev. out
        ↓
Optimal bearing
movements out
```

LAZY

Rec. matrix in

Given bearing
movements in

Bending moment in

*Fig. 6*

Allowed angle
dev. in

Transform. of angle
dev. to moments — T3

Start value

Vector transform.
$xm_i \rightarrow ym_i$ — T4

T6

Vector transform.

Vector transform.
$ym_i \rightarrow xm_i$ — T5

C9

Calc. of angle dev.

Angle dev. out

Calc. of bearing
movements $\delta_i$
correspond. to $xm_i$ — C7

Res. moments out

Calc of sum of bearing
movements $\Sigma \, |\delta_i|$ — C8

Optimal bearing
movements out

new
$ym_i$

MIN2

No $\qquad \Sigma \, |\delta_i|$ No conv.
min. ?

Error

yes